# DEMANDE DE BREVET EUROPEEN

(11) **EP 0 730 824 A1**
(43) Date de publication de la demande: **11.09.1996**
(21) Numéro de dépôt: 95402581.3
(22) Date de dépôt: 17.11.1995
(51) Int. Cl.: A01K 1/00, A01K 31/22, F24F 7/00

(54) **Bardage ajouré éclairant: profilé extrudé en matière synthétique translucide ou transparente**

(30) Priorité: 25.11.1994 FR 9414180
(71) Demandeur: POLYDAV AGRI Sarl, F-78517 Rambouillet Cédex (FR)
(72) Inventeur: Chenavas, Dominique, F-26230 Grignan (FR); Brule, Jean, F-01130 Les Neyrolles (FR)

(57) **Abrégé**

L'invention concerne un dispositif caractérisé en ce que ses éléments constructifs sont des tronçons de profilé extrudé en matière synthétique transparente (1), de section aplatie disposé sur les côtés d'un bâtiment d'élevage en respectant un intervalle entre chaque profilé. De par ce positionnement, le dispositif permet une entrée d'air freinée dans le bâtiment, et un éclairage latéral, par la transparence des profilés.

Les variations maîtrisées des entrées et des sorties d'air sont la résultante d'une adaptation simple, version amovible des profilés, ou plus sophistiquée, version articulée des profilés.

Le dispositif, selon l'invention, est particulièrement destiné aux bâtiments d'élevage en substitution de tout ou partie des bardages ajourés en planche bois (8), ou en substitution de tout ou partie de bardages pleins des bâtiments d'élevage.

## Description

La présente invention concerne un dispositif, visant à pallier les inconvénients liés au bardage des bâtiments d'élevage, particulièrement les bardages bois ajourés, qui sont le manque de luminosité à l'intérieur du bâtiment et l'impossibilité de faire varier les entrées d'air.

L'exposé qui suit présente successivement l'état de la technique antérieure, faisant ressortir les problèmes techniques posés, les solutions apportées par l'invention, et étudie le positionnement du dispositif sur un bâtiment d'élevage.
- Ventiler correctement un bâtiment d'élevage est une nécessité vitale pour les animaux, comme pour le bâtiment.
- Les exigences des animaux peuvent être satisfaites, dans la grande majorité des cas, grâce à des solutions techniques simples en économiques s'appuyant sur le principe de la ventilation naturelle.

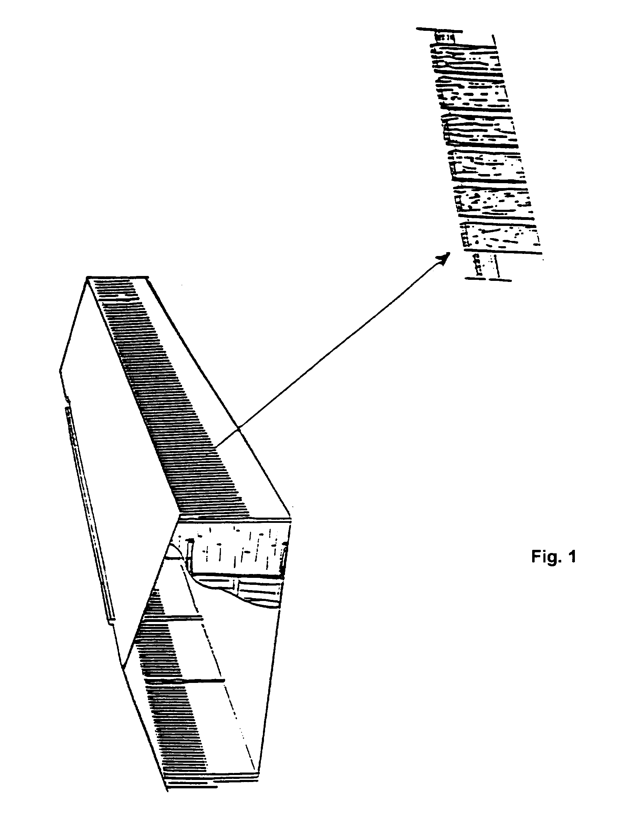

Cette dernière, fonctionnant sous l'effet du vent, peut engendrer des vitesses d'air excessives (courants d'air), néfastes aux animaux. Cette vitesse doit donc être limitée par l'utilisation de dispositifs brise-vent qui se présentent sous des formes aussi variées que la haie végétale, le filet dit "brise-vent" en matériaux synthétiques, les tôles perforées, ou le bardage ajouré.
- Le bardage ajouré est un système répandu, qui consiste à assembler, sur une armature en bois, des planches de bois d'une largeur généralement de 100 mm, avec un espace entre chaque planche de 16 mm, 2C mm ou 25 mm (se reporter à figure 1). La juxtaposition des planches respectant, entre elles, l'interstice de 16 à 25 mm permet :
- De freiner la vitesse du vent entrant dans le bâtiment.
- Par là même, de créer une ventilation dite "naturelle" en opposition à la ventilation dynamique qui utilise des systèmes brassant l'air comme des ventilateurs, par exemple.

L'efficacité d'arrêt du vent, dans le cas d'un bardage bois, est parfaite, puisque proche de 95 % ; donnée connue et établie par le CEMAGREF, établissement public sous la tutelle des Ministères de la Recherche et de l'Agriculture.

L'inconvénient, limitant systématiquement l'application du bardage bois ajouré, est l'insuffisance de luminosité qu'il induit à l'intérieur du bâtiment.

En effet, la lumière ne peut pénétrer dans le bâtiment que par l'écartement de 16 à 25 mm entre les planches en bois, permettant l'entrée d'air et la ventilation naturelle.

Cela implique donc (pour respecter, entre autres, le cycle biologique des animaux) une association du bardage bois ajouré avec d'autres systèmes, ayant pour fonction de freiner la vitesse de l'air entrant dans le bâtiment : les filets brise-vent ou tôles perforées, et de permettre ainsi l'augmentation de la luminosité recherchée à l'intérieur du bâtiment.

Ces palliatifs restent cependant limités en efficacité d'éclairement et de contrôle d'ambiance. En effet, s'y ajoutent un certain niveau sonore (flottements, claquements, battements, etc...) et une inertie thermique nulle sur de grandes surfaces d'échange quasi-direct entre intérieur et extérieur, pouvant engendrer des pertes de température en période froide, ou un effet de four en période chaude.

On notera que d'autres produits spécifiques apportent naturellement de la lumière à l'inférieur d'un bâtiment. Ils sont conçus à cet effet et couramment utilisés : vitres en verre ou matériaux synthétiques, tôles transparentes, plaques de polymétacrylate, etc...

Ces produits n'ont volontairement pas été signalés car aucun matériel ne peut prétendre associer, à l'apport de lumière par transparence du matériel, un concept de ventilation dite naturelle qui caractérise le bardage ajouré, les filets brise-vent ou les tôles perforées.

En effet, la différence fondamentale réside dans le fait que ces derniers produits présentent volontairement un passage contrôlé des échanges d'air.

Les vitres, tôles transparentes, plaques de polymétacrylate, films plastiques incolores, ont pour fonction essentielle de transmettre la lumière dans le bâtiment. Pour ce faire, ces matériaux créent un obstacle à l'entrée de l'air.

### L'INVENTION

Pour faciliter la compréhension, l'invention présentée ci-dessous sera mise en opposition et comparée à un dispositif employé fréquemment en construction de bâtiment d'élevage : le bardage ajouré en planche de bois.

Toutefois, l'invention ne peut limiter son champ d'application au bardage ajouré en planche de bois. En effet, tous les matériaux entrant dans le domaine du bâtiment d'élevage, sous le terme générique bardage, peuvent être remplacés, pour tout ou partie, par la présente invention. Nous citerons pour exemple non limitatif : les tôles, les plaques en Fibrociment, les plaques polyester, les translucides, etc...

### LE BARDAGE AJOURE ECLAIRANT

L'invention vise à éviter l'inconvénient majeur du bardage ajouré en planche de bois, qui est l'obscurcissement d'un bâtiment, associé à l'impossibilité, par la fixité du bardage bois, de faire varier les entrées d'air.

Pour ce faire, le nouveau produit reprend le principe déjà détaillé en introduction et présenté en figure 1 du bardage ajouré et assure maintenant trois fonctions essentielles à la place d'une :
- Freiner la vitesse du vent entrant dans un bâtiment, et par là même, créer une ventilation naturelle tout comme le bardage bois ajouré.
- Apporter la luminosité d'une manière significative dans le bâtiment : effet bénéfique sur les animaux, sur le confort de travail de l'éleveur et sa sécurité (fonction nouvelle).
- Augmenter et contrôler les entrées d'air dans ce même bâtiment : meilleure productivité de l'élevage (fonction nouvelle).

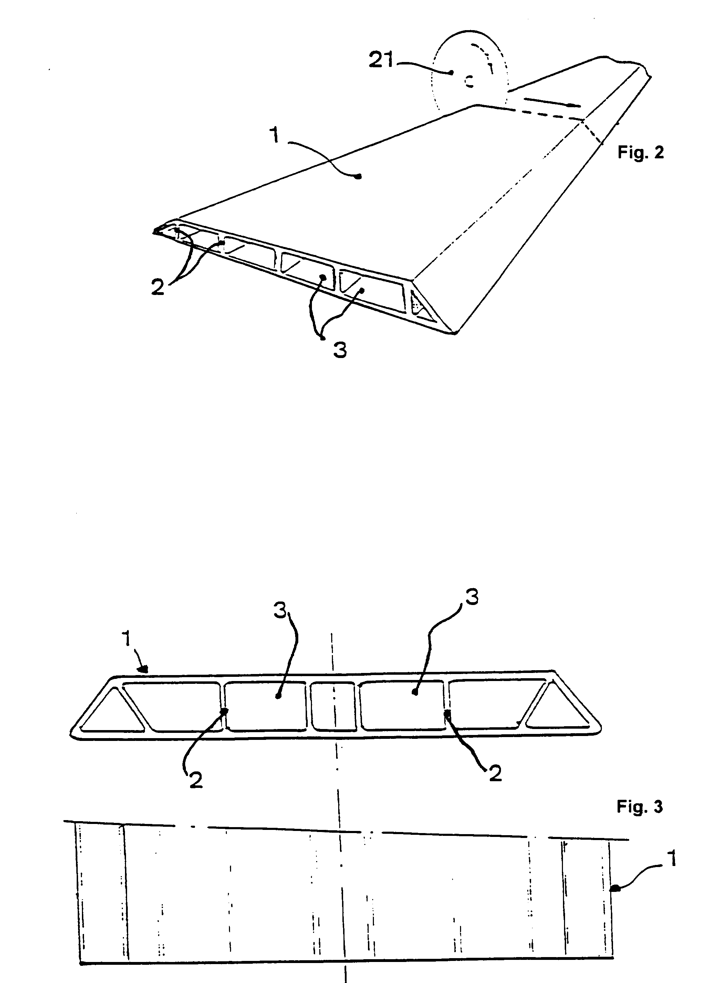

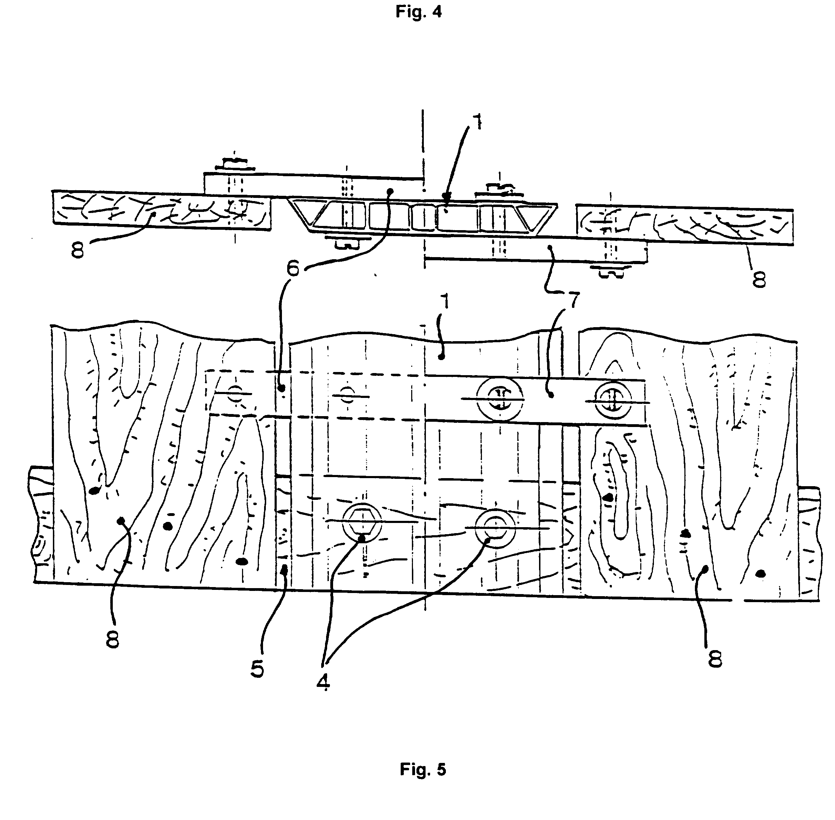

Ce nouveau produit qui permet d'assurer ces trois fonctions est :
Un profilé extrudé en matière synthétique translucide ou transparente. Ce profilé a, de préférence, une structure tubulaire de section aplatie en double paroi (1) (figure 2) ; il a éventuellement une coloration filtrante (1) (figure 3). Ce profilé est réalisé selon les descriptions ci-après et détaillé en figure 2 et en figure 3.
- Extrusion d'une "planche" en deux parois parallèles reliées par des ponts délimitants des tubes de section rectangulaire, trapézoïdale et triangulaire juxtaposés. Cette disposition permet de répondre au mieux aux sollicitations de déformations. En effet, ces cloisons intérieures de raidissement (2) (figure 2 et figure 3) délimitant une pluralité de cellules (3) permettent une inertie aux échanges thermiques et une résistance au fléchissement sous charge, essentiellement au vent, après respect de simples préconisations d'emploi.
- Profil extérieur trapézoïdal, autorisant ainsi une résistance aux déformations mécaniques ou thermiques.
- La simplicité de réalisation du produit permet un usage et une pose simplifiée, ainsi qu'une possibilité de débit par sciage à longueur voulue : illustré figure 2 (21).
- Le profilé a, de préférence, une présentation proche des éléments de bardage des bâtiments d'élevage, en particulier les planches ajourées en bois (figure 1). Le profilé peut s'intégrer par des moyens mécaniques de fixation (figure 5) tels que les clous, vis, agrafes, chevilles, tire-fond ou rivets (4) sur les pièces constituant les montants de maintien du bardage ajouré (5) ou par d'autres systèmes de pose comme par exemple, des barrettes de fixation (figures 4 et 5), intérieures (6) ou extérieures (7), prenant appui sur les planches voisines du bardage ajouré opaque en bois (8).

### LE BARDAGE AJOURE ECLAIRANT ARTICULE

Présenté en version fixe, le *bardage ajouré éclairant* détaillé ci-dessus, trouve naturellement une de ses applications en juxtaposition des planches en bois, qui constituent le bardage ajouré d'un bâtiment, pour apporter la luminosité, tout en freinant, comme les planches ajourées, la vitesse du vent à l'intérieur du bâtiment.

*Le bardage ajouré* éclairant (gardant pour fonction l'apport de luminosité tout en freinant l'air dans un bâtiment) peut, par des dispositifs d'articulations mécaniques, se transformer en volet déflecteur et de ce fait prend le nom de : *Bardage ajouré éclairant articulé.*

La commande permettant l'articulation peut être : individuelle manuelle, centralisée manuelle, centralisée automatique par des moyens mécaniques, électriques ou de préférence pneumatiques sans dépense d'énergie notable.

Le *bardage ajouré éclairant* permet ainsi d'apporter, en plus de ses fonctions premières, des ouvertures visant à augmenter les échanges entre l'air ambiant et l'air extérieur. Les ouvertures servant à rétablir ou établir (par ouverture ou fermeture) certains paramètres jugés excessifs ou insuffisants par l'observation de l'éleveur comme :
la température, le degré hygrométrique, la charge en vapeur d'ammoniac, etc...

Un système centralisé de commandes asservi à différents contrôles automatiques tels que (exemples non limitatifs) : hygrostat, thermostat, ainsi qu'une interdiction de fonctionnement par vent de tempête par un système de contrôle anémométrique, peut se substituer à l'observation de l'éleveur et permettre ainsi une sécurité active et optimum des moyens de production, associée à un meilleur "confort de travail" de l'éleveur.

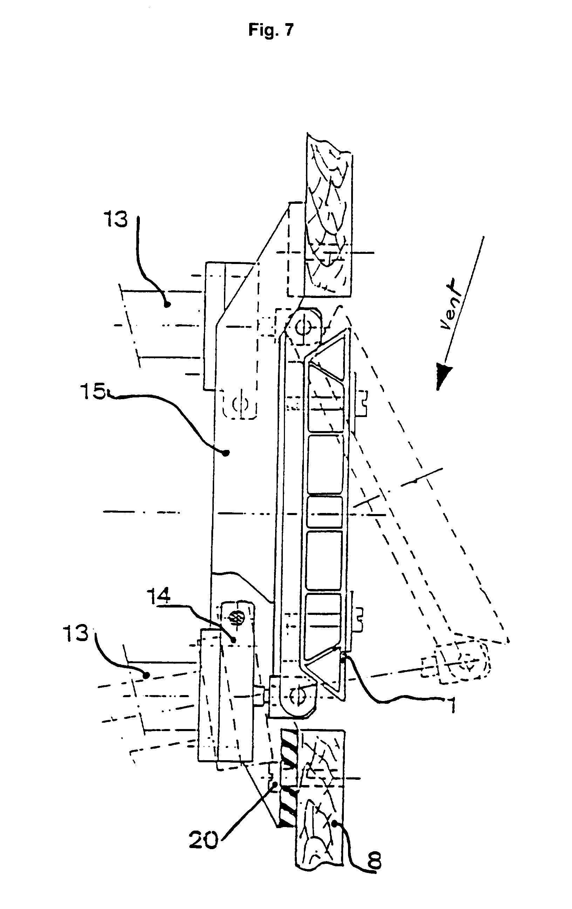

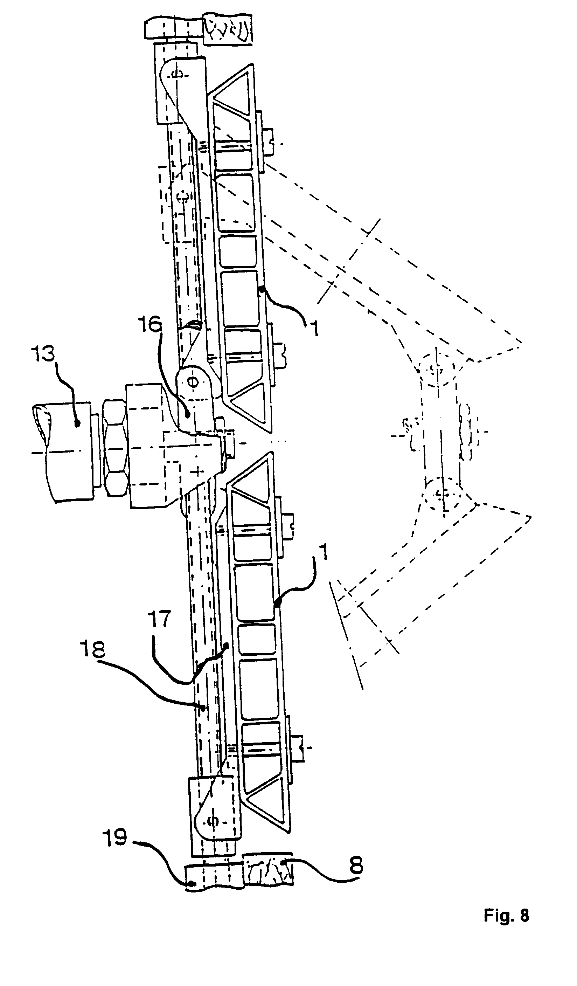

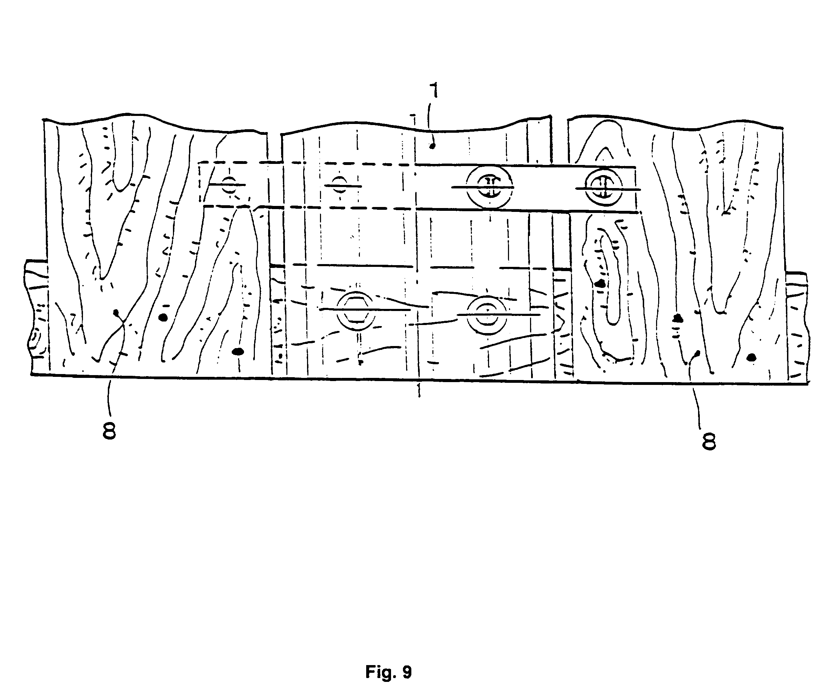

Les figures 7 et 8 schématisent, en vue simplifiée, deux systèmes d'articulation non exclusif, pour la compréhension de ce qui précède.

La fonction articulée du bardage ajouré est obtenue, par exemple, par l'intermédiaire de vérins (13) actionnants soit une embase articulée (14) sur un pont de mise en place (15) (figure 7), soit une double chape d'accouplement (16) poussant deux bardages ajourés éclairants (1) maintenus par des barrettes mobiles de fixation (17) glissant sur deux tubes parallèles superposés prévus à cet effet (18). L'ensemble est maintenu sur les planches ajourées opaques (8) par des plots de mise en place (19) (figure 8) ou des moyens mécaniques tels que vis ou clous (20) (figure 7).

### LE BARDAGE AJOURE ECLAIRANT AMOVIBLE

Version intermédiaire entre le bardage ajouré éclairant fixe et le bardage ajouré articulé, le *bardage ajouré amovible* coulisse dans un système de glissières, ayant pour fonction le maintien du profilé transparent, tout en permettant une pose et une dépose facilitée de ce dernier. Ce système permet de compléter la palette des produits présentés.

Le *bardage ajouré amovible* peut ainsi apporter, en plus de ses fonctions premières, une solution simple et économique aux échanges thermiques, entre l'air ambiant d'un bâtiment d'élevage et l'air extérieur. Nous citerons comme exemple d'application non limitatif, la pose du *bardage ajouréamovible* à l'automne et sa dépose au printemps.

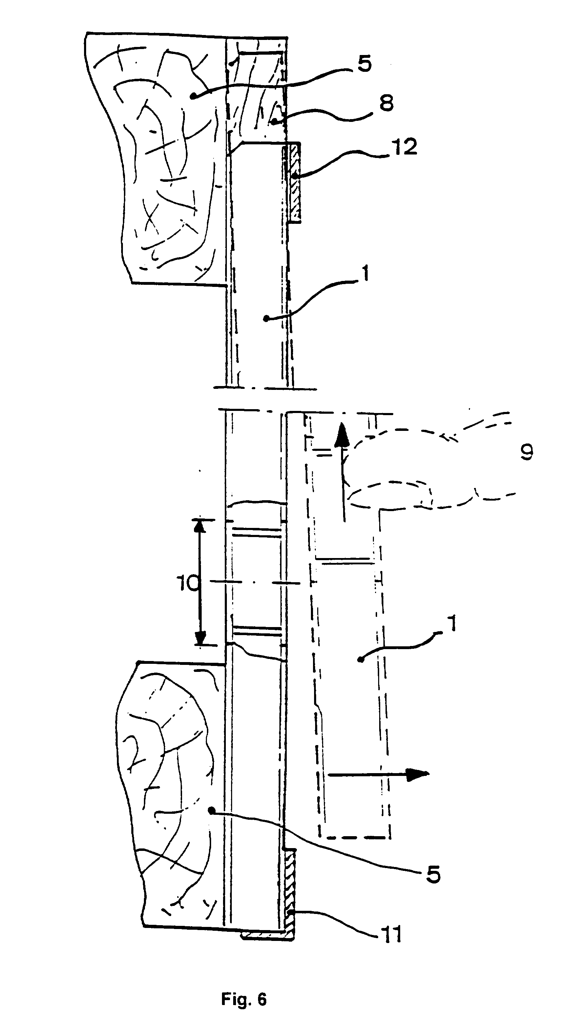

La figure 6 schématise, en vue simplifiée, le *bardage ajouré éclairant amovible.* Celui-ci coulisse dans un système de glissières de maintien non exclusif. Cette amovibilité est obtenue, par exemple, par levage (9) du profilé (1) grâce à une ouverture prévue à cet effet (10). La dépose du bardage ajouré éclairant (1) est obtenue en désengageant ce dernier des pièces de maintien inférieures (11) et supérieures (12).

### LE POSITIONNEMENT DU BARDAGE AJOURE ECLAIRANT, UN CAS CONCRET : UTILISATION EN BATIMENT D'ELEVAGE

Le profilé extrudé translucide ou transparent a pour mission, de se substituer pour tout ou partie aux planches de bois qui constituent le bardage ajouré d'un bâtiment d'élevage.

Toutes les combinaisons permettant la juxtaposition de plancnes de bois, par exemple, et de profilés extrudés translucides ou transparents, respectent un écartement par exemple de 16 à 25 mm afin de créer une ventilation naturelle, visant à augmenter ou à réguler la luminosité à l'intérieur du bâtiment d'élevage, sont envisageables. Exemple : un profilé extrudé transparent toutes les 10 planches ajourées, un ou plusieurs profilés toutes les 50 planches bois ajourées, un profilé toutes les planches bois, etc...

Ainsi, le profilé extrudé en matière synthétique translucide ou transparente, appelé *bardage ajouré amovible* tout en conservant l'efficacité d'arrêt au vent nécessaire en ventilation naturelle, permettra d'augmenter de manière significative, la luminosité du bâtiment d'élevage grâce à la transparence des matières synthétiques qui le composent.

De même, dans le cas d'utilisation du bardage ajouré éclairant en remplacement du bardage plein, lumineux ou non, (tôles, murs, planches jointes, plaques de Fibrociment, divers translucides, etc...), le bardage ajouré éclairant dans ses versions fixes ou mobiles, s'avère être une solution économique et efficace pour pallier les déficiences d'entrée d'air et de lumière dues au bardage plein.

Dans ce cas de figure, le nouveau dispositif peut venir en substitution de tout ou certaine partie du bardage plein.

Rappelons pour fixer l'intérêt d'une parfaite maîtrise de la ventilation dans un bâtiment d'élevage, que :
- Une vache élimine 11 litres d'eau par jour sous forme de vapeur (2 litres pour une brebis), soit l'équivalent d'un millimètre de pluie tous les jours dans le bâtiment.
- L'aération du bâtiment est indispensable pour éliminer cette eau, mais sans faire de courant d'air.

En conclusion, l'invention a pour objet la création d'un nouveau produit, visant, dans le domaine des bâtiments d'élevage, à :
- Freiner la vitesse du vent (nuisible aux animaux) dans le cadre d'une ventilation naturelle. Cet avantage est obtenu par la juxtaposition de profilés extrudés en matière synthétique, respectant un écartement (par exemple de 16, 20 ou 25 mm) entre chaque profilé, entre chaque profilé et planche en bois ou entre chaque profilé et produit de bardage, de manière à permettre une entrée d'air freinée dans le bâtiment d'élevage.
- Accroître d'une manière significative la luminosité transversale à l'intérieur du bâtiment d'élevage par le remplacement (par exemple dans le cadre d'un bardage bois) de la planche, ou des planches en bois par un ou plusieurs profilés extrudés en matière synthétique, translucide ou transparente, ayant pour fonction d'augmenter la luminosité à l'intérieur du bâtiment.
- Augmenter et contrôler les entrées d'air ainsi que la luminosité, en remplaçant tout ou partie du bardage plein (tôles, murs, plaques de Fibrociment, divers translucides, etc...) existant sur un bâtiment d'élevage par le *bardage ajouré éclairant.*
- Augmenter, puis contrôler les entrées d'air par les versions amovibles ou articulées du *bardage ajouré éclairant.*

### NB :

La proportion des *bardages ajourés éclairants* peut être modulée en fonction des nécessités du type d'élevage, par exemple : bovins, ovins, caprins, porcins, volailles, etc....

Tous ne demandent pas la même ambiance lumineuse qui, d'autre part, est aussi à harmoniser avec les conditions climatiques régionales aux ensoleillements différents.

ion des avantages réside dans cette possibilité d'augmenter ou de diminuer la fréquence d'insertion des *bardages ajourés éclairants,* selon les conditions imposées par le type d'élevage et les conditions climatiques locales.

## Revendications

1. Dispositif s'intégrant dans les éléments de bardage des bâtiments d'élevage, particulièrement le bardage en planches bois ajourées (figure 1), caractérisé en ce que ses éléments constructifs sont des tronçons de profilés extrudés en matière synthétique transparente (figure 2), éventuellement à coloration filtrante (figure 3) pour augmenter la luminosité, plus spécifiquement la luminosité transversale, freiner la vitesse d'entrée d'air par juxtaposition des profilés transparents (1), respectant entre eux un intervalle (figures 4 et 5).

2. Tronçon (21) de profilé extrudé (1) en matière synthétique transparente (figure 2), éventuellement à coloration filtrante, destiné, selon la revendication 1, à constituer le dispositif s'intégrant dans les éléments de bardage des bâtiments d'élevage, en remplacement de tout ou partie de ces derniers.

3. Dispositif, selon la revendication caractérisé en ce que le profilé extrudé a une structure tubulaire et transparente, de section aplatie en double paroi (figures 2 et 3).

4. Dispositif, selon la revendication 1 ou 3, caractérisé en ce que le profilé a des cloisons intérieures de raidissement (2) (figures 2 et 3), délimitant une pluralité de cellules (3) permettant une inertie aux échanges thermiques et une résistance au fléchissement sous charge, essentiellement au vent, après respect de simples préconisations d'emploi.

5. Dispositif selon la revendication 1 ou 3 ou 4, caractérisé en qu'il est intégré dans les éléments de bardage des bâtiments d'élevage, en remplacement de tout ou partie de ces derniers, par des moyens mécaniques de fixation (figure 5) tels que les clous, vis, tire-fond, agrafes, chevilles, rivets ou taquets coulissants (4) sur les pièces constituant les montants de maintien dudit bardage (5).

6. Dispositif selon la revendication 1 ou 3, ou 4, caractérisé par un système de pose (figures 4 et 5) comprenant des barrettes de fixation intérieure (6) ou extérieure (7) prenant appui sur les planches voisines du bardage ajouré opaque en bois (8).

7. Dispositif selon la revendication 1 ou 3, ou 4, caractérisé par un système de fixation (figure 6) constitué de pièces de maintien inférieure (11) et supérieure (12) permettant, par là même, de rendre tout ou partie des profilés transparents amovibles. Cette amovibilité est obtenue par levage (9) du profilé (1), grâce à une ouverture prévue à cet effet (10). La dépose du bardage ajouré éclairant (1) est obtenue en désengageant ce dernier des pièces de maintien inférieures (11) et supérieures (12).

8. Dispositif selon la revendication 1 ou 3, ou 4, caractérisé par sa présentation proche des éléments de bardage des bâtiments d'élevage, pouvant, grâce à une articulation, permettre la fonction de volet mobile d'aération, pour augmenter ou réduire automatiquement les entrées d'air à l'intérieur des bâtiments d'élevage (figures 7 et 8). Cette fonction est obtenue par l'intermédiaire de verins (13) actionnant, soit une embase articulée (14) sur un pont de mise en place (15) (figure 7), soit une double chape d'accouplement (16), poussant deux bardages ajourés éclairant (1), maintenus par des barrettes mobiles de fixation (17) glissant sur deux tubes parallèles superposés, prévus à cet effet (18). L'ensemble est maintenu sur les planches ajourées opaques (8) par des plots de mise en place (19) (figure 8), ou des moyens mécaniques, tels que vis ou clous (20) (figure 7).
